(19) Europäisches Patentamt / European Patent Office / Office européen des brevets

(11) **EP 2 256 146 A1**

(12) **EUROPÄISCHE PATENTANMELDUNG**

(43) Veröffentlichungstag:
01.12.2010 Patentblatt 2010/48

(51) Int Cl.:
*C08G 64/20* (2006.01)        *C08G 64/40* (2006.01)
*B29C 47/76* (2006.01)

(21) Anmeldenummer: 09007270.3

(22) Anmeldetag: 30.05.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR
Benannte Erstreckungsstaaten:
AL BA RS

(71) Anmelder: **Bayer MaterialScience AG**
**51368 Leverkusen (DE)**

(72) Erfinder:
 • **König, Thomas, Dr.**
   **51375 Leverkusen (DE)**
 • **Kirchhoff, Jörg, Dr.**
   **51061 Köln (DE)**

 • **Bierdel, Michael, Dr.**
   **51373 Leverkusen (DE)**
 • **Kohlgrüber, Klemens, Dr.**
   **51515 Kürten (DE)**
 • **Rechner, Johann, Dr.**
   **47906 Kempen (DE)**
 • **Vaes, Johan**
   **2920 Kalmthout (BE)**
 • **Vanden Eynde, Johan**
   **9052 Zwijnaarde (BE)**
 • **Bruynseels, Frank**
   **9170 Sint Gillis-Waas (BE)**
 • **Ruytinx, Bert**
   **3545 Halen (BE)**

(54) **Polycarbonate mit extrem hoher Reinheit und guter Eigenfarbe und thermischer Beständigkeit sowie eine Vorrichtung und ein Verfahren zu ihrer Herstellung**

(57) Die Erfindung betrifft Polycarbonate mit extrem niedrigen Restwerten an flüchtigen Bestandteilen und thermischen Abbauprodukten sowie verbesserten optischen Eigenschaften, insbesondere Yellowness Index (YI) und guter thermischer Stabilität, aus lösungsmittelhaltigen Polymerschmelzen. Desweiteren betrifft die Erfindung eine Vorrichtung und ein Verfahren zur Herstellung dieser Polycarbonate mit Hilfe eines Entgasungsextruders mit mindestens drei Entgasungszonen und vor mindestens drei Entgasungszonen Zonen zum Eindispergieren von Schleppmittel vorhanden sind.

EP 2 256 146 A1

**Beschreibung**

Die Erfindung betrifft Polycarbonate mit extrem niedrigen Restwerten an flüchtigen Bestandteilen und thermischen Abbauprodukten sowie verbesserten optischen Eigenschaften, insbesondere Yellowness Index (YI) und guter thermischer Stabilität, aus lösungsmittelhaltigen Polymerschmelzen. Desweiteren betrifft die Erfindung eine Vorrichtung und ein Verfahren zur Herstellung dieser Polycarbonate mit Hilfe eines Entgasungsextruders mit mindestens drei Entgasungszonen und vor mindestens drei Entgasungszonen Zonen zum Eindispergieren von Schleppmittel vorhanden sind

Im bekannten Grenzflächenverfahren zur Herstellung von Polycarbonaten werden Lösungsmittel wie aromatische Chlorkohlenwasserstoffe wie Chlorbenzol und Dichlormethan eingesetzt, deren Restgehalte im Endprodukt unerwünscht sind, da sie im Polycarbonat stören. Um diese flüchtigen Bestandteile zu entfernen muss der Entgasungsextruder nach den aus dem Stand der Technik bekannten Verfahren bei höheren Temperaturen betrieben werden, wodurch thermische Schädigungen und Abbauprodukte entstehen, was den Nachteil verschlechterter optischer Eigenschaften aufgrund von Fehlstrukturen aufweist.

Eine effiziente Aufkonzentrierung der Polycarbonatlösung und Ausdampfung der Restgehalte an Lösungsmittel bei niedrigen Temperaturen ist deswegen von höchster Bedeutung um Polycarbonate mit verbesserten optischen Eigenschaften zu erlangen.

Das Verfahren zur Polycarbonatsynthese nach dem Phasengrenzflächenverfahren ist mannigfaltig in der Literatur beschrieben, so unter anderem bei Schnell, "Chemistry and Physics of Polycarbonates", Polymer Reviews, Volume 9, Interscience Publishers, New York, London, Sydney 1964, Seite 33-70.

Bei dem Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und in einem mehrstufigen Verfahren gewaschen, um Reste von Natrium und Katalysator zu entfernen. Typischerweise enthält die organische Phase nach der Reaktion 10-20 Gew.-% Polycarbonat.

Das Polycarbonat muss anschließend aus der organischen Phase isoliert werden. Die gängigen Verfahren zur Konzentrierung der Polycarbonatlösung und zur Isolierung des Polycarbonats sind in der Patentliteratur und in Lehrbüchern beschrieben und dem Fachmann geläufig. Die Isolierung des Polycarbonats aus der Lösung wird bevorzugt durch Verdampfen des Lösungsmittels mittels Temperatur oder Vakuum durchgeführt. Dieses Verfahren erfordert, um nach dem Verdampfen des Lösungsmittels direkt die Schmelzephase zu erhalten, den Einsatz eines hoch siedenden (>100°C) Lösungsmittels, beispielsweise Chlorbenzol. Um die Löslichkeit des Polymers im Lösungsmittel während der Reaktion zu verbessern, wird auch ein Gemisch aus einem oder mehreren hochsiedenden Lösungsmitteln und dem niedrig siedenden Dichlormethan eingesetzt. Typischerweise ist das Gewichtsverhältnis von Dichlormethan zu dem hochsiedenden Lösungsmittel etwa 1:1.

Eine Möglichkeit, Polycarbonat ohne nachweisbare Mengen an Restlösemittel herzustellen, ist die Herstellung nach dem Umesterungsverfahren. Auch dieses Verfahren ist dem Fachmann geläufig und ebenfalls bei Schnell, "Chemistry and Physics of Polycarbonates", beschrieben. Bei diesem Verfahren werden die Monomere, ein Bisphenol oder eine Mischung von verschiedenen Bisphenolen mit einem Diarylcarbonat oder einer Mischung aus verschiedenen Diarylcarbonaten, in einer Gleichgewichtsreaktion umgesetzt. Als Nebenprodukt entstehen hierbei ein Phenol oder eine Mischung aus Phenolen. Unter Entfernung dieser Phenole baut sich das gewünschte Molekulargewicht auf.

Nach dem Umesterungsverfahren hergestellte Polycarbonate enthalten zwangsläufig die bei der Reaktion entstehenden Phenole sowie Reste an den Monomeren Bisphenol und an Diarylcarbonat (beispielsweise Diphenylcarbonat). Restgehalte an Diphenylcarbonat liegen beispielsweise im Bereich von 200 bis 700 ppm. Diese Stoffe wirken ebenfalls störend. Sie werden während der Verarbeitung wie Spritzguss und Extrusion beim Verarbeiter teilweise freigesetzt und führen dort zu Geruchsbelästigung und Umweltbelastung. Weiterhin können sie beim Spritzguss zu Belagbildung und damit zu reduzierten Standzeiten führen. Auch können sie bei Kontakt mit Lebensmitteln aus dem Polycarbonat in das Lebensmittel übergehen und dort zu Veränderungen im Geschmack führen. Besonders sensibel gegen Geschmacksveränderungen ist Wasser. Besonders Phenole neigen zur Bildung von halogenierten Phenolen, wenn Lebensmittelbehälter aus Polycarbonat bei der Reinigung und / oder Desinfektion mit Chlor-aktiven Agenzien oder stark oxidierenden Mitteln bei Anwesenheit von Chlor- oder Brom-Ionen in Kontakt kommen. Der Geschmacksschwellenwert von Phenol in Wasser ist in der Literatur mit 10 $\mu$g/l (Young & Crane et al.,1996) angegeben, der von halogenierten Phenolen liegt in etwa um den Faktor 500 niedriger (.H. Burttschel et al., J. Am. Water Works Assoc., 51:205(1959) "Chlorine derivative of phenol causing taste and odor und C. Joll et al., Curtin University of Technology, Centre for Applied organic Geochemistry, "The Chemistry of Halophenol Tastes in Perth Drinking Water") . Daher sind Restgehalte an Phenol in Polycarbonat für das Lebensmittel Wasser besonders ungünstig.

Weiterhin enthalten nach dem Umesterungsverfahren hergestellte Polycarbonate zwangsläufig Reste an Katalysatoren. Diese Katalysatoren sind dem Fachmann bekannt und in zahlreichen Patentschriften offenbart. Es können z.B. alkalische Verbindungen von Alkali- oder Erdalkalimetallen sein wie beispielsweise Natriumphenolat sein, beispielsweise in Konzentrationen größer als 30 ppb (bezogen auf Natrium). Derartige Verbindungen sind für die Qualität und Stabilität des Polycarbonats ungünstig. Da beim Umesterungsverfahren bekanntlich phenolische OH-Endgruppen mit Aryl-Endgruppen unter Molekulargewichtsaufbau reagieren müssen, enthalten nach dem Umesterungsverfahren hergestellte Polycarbonate zwangsläufig einen gewissen Mindestanteil an phenolischen OH -Endgruppen. Technisch hergestellte Polycarbonate nach dem Umesterungsverfahren haben Konzentrationen an phenolischen OH-Endgruppen, die beispielsweise oberhalb von 200 ppm liegen. Phenolische OH-Endgruppen sind für Polycarbonat besonders schädlich, weil sie die Stabilität des Polycarbonats negativ beeinflussen und z.B. direkt zur Rückspaltung von Phenol sowie zur Rückbildung von Diarylcarbonaten führen können. Die für die Herstellung von Polycarbonat beispielsweise eingesetzten Phosphonium-Katalysatoren wie z.B. Tetraphenylphosphoniumphenolat haben zwar den Vorteil, unter Temperatur zu zerfallen, verbleiben jedoch in geringen Resten ebenfalls im Produkt und verringern ebenfalls die Stabilität des Polycarbonats.

Eine weitere Möglichkeit, Polycarbonat herzustellen, besteht in der Phosgenierung von Bisphenolen in der Gegenwart von Pyridin oder Mischungen von Pyridin und Chlorbenzol, wie beispielsweise in der US 3 114 432 beschrieben. Polycarbonate mit Restgehalten an Pyridin sind aufgrund des intensiven, unangenehmen Geruchs für Lebensmittelanwendungen völlig ungeeignet

Halogenierte Lösemittel zeigen ähnlich niedrige sensorische Schwellen wie Phenole und deren halogenierten Derivate. Sie besitzen zwar niedrigere Löslichkeiten und migrieren aufgrund ihrer niedrigeren Diffusionskonstanten langsamer, gehen aber je nach Bedingungen in Wasser über und verursachen somit Geschmacksveränderungen. Bei Geschmackstests haben Testpersonen bereits Geschmacksveränderungen bei Chlorbenzol-Gehalten im Wasser von 1 ppb festgestellt. Um eine solche Geschmacksveränderung sicher auszuschließen, ist ein Chlorbenzol-Restgehalt in aus Polycarbonat hergestellten Trinkwasserflaschen von weniger als 10 ppm erforderlich.

Bei dem thermischen Abbau von Polycarbonaten können auch Kresole entstehen, die durch ihren intensiven Geschmack ebenfalls zu Geschmacksveränderungen bei Lebensmitteln führen können. Eine weitere Möglichkeit der Herstellung von Polycarbonat besteht in der Reaktion in der Phasengrenzfläche mit anschließender Isolierung des Polycarbonates aus dem organischen Lösemittel durch Eindüsung eines erhitzten Gases, vor allem Wasserdampf, zum Austreiben der flüchtigen Bestandteile. Dabei wird die Polycarbonatlösung mit dem Trägergas versprüht, und Polycarbonat fällt als Feststoff an, vor allem als wasserfeuchte Suspension. Andere Isolierungsmethoden sind die Kristallisation und Fällung sowie das Ausheizen der Reste des Lösungsmittels in der festen Phase. Letzteres Verfahren erfordert den Einsatz von Dichlormethan als Lösungsmittel, wobei Restgehalte an flüchtigem Lösungsmittel von etwa 2 ppm Dichlormethan erreicht werden können.

Restgehalte an Dichlormethan stören allerdings im Polycarbonat besonders, da Dichlormethan bekanntermaßen beim Verarbeitungsprozess mit Restfeuchte zusammen Salzsäure abspaltet und so zu Verfärbungen des Polycarbonats und zu Korrosion an Werkzeugen führen kann. Dichlormethan kann bei erhöhten Temperaturen auch im Aufarbeitungsprozess zu Qualitätseinbußen wie Verfärbungen und Gelbildung führen.

Bei der Phosgenherstellung aus Chlor und Kohlenmonoxid, die für das Phasengrenzflächenverfahren erforderlich ist, wird eine ggf. vorkommende Nebenkomponente Methan bekanntlicherweise zu Tetrachlorkohlenstoff umgesetzt. Bei dem Sprühverfahren wird der Schwersieder Tetrachlorkohlenstoff gegenüber dem Leichtsieder Dichlormethan angereichert, so dass nach dem Sprühverfahren auch Restgehalte an Tetrachlorkohlenstoff im Bereich von bis zu 2 ppm übrigbleiben können. Restgehalte an Tetrachlorkohlenstoff sind, wie dem Fachmann bekannt, im Produkt besonders unerwünscht.

Eine weitere Methode ist die Isolierung von Polycarbonat aus Lösung durch Eindüsen von Dämpfen von aromatischen, nicht chlorierten aromatischen Verbindungen wie beispielsweise Benzol, Toluol, Ethylbenzol oder verschiedener Xylole in eine Polycarbonat-Lösung in Dichlormethan mit anschließender Verfestigung und Trocknung, wie beispielsweise in der DE 3 429 960 beschrieben. Restgehalte an aromatischen Verbindungen können ebenfalls geschmacksverändernd wirken. Eine Methode zum sicheren Entfernen von Tetrachlorkohlenstoff und Dichlormethan lehrt die DE 3 429 960 nicht. Ein erheblicher Nachteil dieser Methode tritt bei der industriellen Umsetzung zu Tage. Hierfür ist aus Gründen der Wirtschaftlichkeit und des Umweltschutzes zwingend erforderlich, die Stoffkreisläufe zu schließen. Vor allem müssen die eingesetzten Aromaten nach der Entfernung aus dem Polycarbonat wieder in den Prozess zurückgeführt werden. Niedermolekulare Bestandteile des Polycarbonats wie beispielsweise thermisch instabile Bisphenole werden bei der Trocknung zusammen mit dem Lösemittel verdampft. Sie werden im Kreislauf thermisch und ggf. oxidativ belastet. Dem Fachmann ist bekannt, dass beispielsweise Bisphenole unter Temperaturbelastung zu farbigen, vor allem gelben, Verbindungen, umgesetzt werden. Diese farbigen Verbindungen reichern sich im Kreislauf an, so dass sie im Dauerbetrieb zu stetiger Verschlechterung der Farben des produzierten Polycarbonats führen. Eine industrielle Produktion von Polycarbonaten mit heller Eigenfarbe ist mit diesem Verfahren daher nicht möglich. Bei Kurzzeit-Versuchen, wie sie in den Beispielen der DE 3 429 960 dargestellt sind, tritt dieser Effekt nicht auf. Auch reichert sich bei längerem Betrieb in diesem Kreislauf Tetrachlorkohlenstoff an, was auf Dauer zu inakzeptabel hohen Gehalten an Tetrachlorkohlenstoff im Polycarbonat führt.

Restgehalte an hochsiedenden Lösemitteln wie aromatischen Kohlenwasserstoffen und Chlor-Kohlenwasserstoffen wirken ebenfalls störend. Sie werden während der Verarbeitung wie Spritzguss und Extrusion beim Verarbeiter teilweise freigesetzt und führen dort zu Geruchsbelästigung und Umweltbelastung. Weiterhin können sie beim Spritzguss zu Belagbildung und damit reduzierten Standzeiten führen. Auch können sie bei Kontakt mit Lebensmitteln aus dem Polycarbonat in das Lebensmittel übergehen und dort zu Veränderungen im Geschmack führen. Ein negativer Einfluss auf den Geschmack kann bereits bei Restgehalten von oberhalb von 10 ppm aromatischen Chlor-Kohlenwasserstoffen im Polycarbonat festgestellt werden. Nach dem Stand der Technik sind keine Verfahren bekannt, die den Restgehalt an aromatischen Kohlenwasserstoffen, insbesondere Chlor-Kohlenwasserstoffen auf ein Niveau von zwischen 0,1 ppm und 10 ppm reduzieren und gleichzeitig ein Produkt liefern, das weniger als die Nachweisgrenze von 0,5 ppm Dichlormethan und weniger als 15 ppm an Phenolen reduzieren und die gleichzeitig evtl. auftretendes Tetrachlorkohlenstoff auf Restgehalte von weniger als der Nachweisgrenze von 0,01 ppm beschränken können sowie gleichmäßig gute Farbe und Thermostabilität liefern.

Bei den bekannten Verfahren zur Verdampfung, oder auch Flashverdampfung, werden Polycarbonatlösungen wiederholt unter leichtem Überdruck auf Temperaturen oberhalb des Siedepunktes erhitzt und diese überhitzten Lösungen anschließend in einen Behälter entspannt, wobei in dem Behälter ein niedrigerer Druck herrscht, als dem Dampfdruck in der Lösung entspricht. Die Wiederholung des Verfahrens ist im Allgemeinen günstig, da die Konzentration an Polycarbonat in der Lösung nach der Reaktion relativ niedrig ist und durch die Wiederholung des Verfahrens eine starke Überhitzung vermieden werden kann. Gängige Verfahren für die apparative Eindampfung von Polycarbonatlösungen sind dem Fachmann geläufig. Beispielsweise kann die überhitzte Lösung in ein beheiztes Wendelrohr entspannt werden, welches in einen Abscheider mündet.

Oberhalb einer bestimmten Konzentration an Polycarbonat (etwa 60 Gew.-%) wird die Eindampfung durch Flashverdampfung durch die hohen Viskositäten erschwert. Die Eindampfung bis zu etwa 60% wird im Weiteren als Voreindampfung bezeichnet. Im Allgemeinen ist es günstig, das restliche Lösungsmittel mit anderen Verfahren, Apparaten und Maschinen zu entfernen. Dies können z.B. Entgasungsextruder oder vertikale Rohrverdampfer sein. Als letzte Stufe können auch Strang- oder Schaumverdampfer eingesetzt werden, um besonders niedrige Restgehalte zu erreichen.

Bei dem Eindampfen von Polycarbonat werden nach dem Stand der Technik meist zu hohe Apparate-Temperaturen und zu lange Verweilzeiten der Schmelze in den Apparaten angewendet, bei denen zwar eine hinreichende Restentgasung der Polycarbonatschmelze von den flüchtigen Bestandteilen erfolgt, allerdings eine Schädigung des so hergestellten Polycarbonats eintritt. Diese Produktschädigungen sind meist eine direkte Folge von zu hoher Temperatur-Belastung bei zu langer Verweilzeit der Polymerschmelze in den Entgasungsapparaten. Dabei treten Nebenreaktionen am Polycarbonat auf, die eine Verschlechterung der optischen Eigenschaften bewirken, insbesondere die Bildung von Fehlstrukturen, die in den aus solchem Polycarbonat hergestellten Formkörpern meist erst im UV-Licht sichtbar werden. Beispiele für solche Fehlstrukturen sind feinste Partikel und Gelkörper. Bei der Verarbeitung von Polycarbonat zu optischen Datenträgern, wie z.B. CDs oder DVDs, bewirken solche Fehlstrukturen im Endprodukt eine erhebliche Qualitätseinbuße, die nicht mehr tolerabel ist und vermieden werden muss.

Die EP 1 088 019 offenbart die Entgasung von Polycarbonat, das nach dem Phasengrenzflächenverfahren hergestellt wurde, mittels einer mehrstufigen Voreindampfung mit abschließendem Strangverdampfer. Dort wird eine erreichte Konzentration an aromatischen Chlor-Kohlenwasserstoffen (Chlorbenzol) von 20 ppm beschrieben.

Aufkonzentrierungen von Chlorbenzolhaltigen Polycarbonatlösungen sind in EP-A 1 265 944 und EP-A1 113 848 beschrieben, deren Beispiele die Herstellung von 65 Gew-%igen Polycarbonatlösungen beschrieben. Derartige Polycarbonatlösungen können zur Restentgasung des Polycarbonats, im Gegensatz zu den dort beschriebenen nachfolgenden Verfahrensschritten, auch in Entgasungsextrudem weiter eingedampft werden.

In EP 1 265 944 wird ein Verfahren zur Entgasung von Polycarbonat, das nach dem nach dem Phasengrenzflächenverfahren hergestellt wurde, mit Strang- oder Rohrverdampfer offenbart. Die niedrigsten in den Beispielen erreichten Restgehalte an aromatischen Chlor-Kohlenwasserstoffen sind 25 ppm.

Die EP 1 113 848 offenbart ebenfalls ein Verfahren zur Entgasung von Polycarbonat, das nach dem nach dem Phasengrenzflächenverfahren hergestellt wurde, mit Strang- oder Rohrverdampfer als letzter Stufe. Die niedrigsten in den Beispielen erreichten Restgehalte an aromatischen Chlor-Kohlenwasserstoffen sind 50 ppm.

Solche Restentgasungen von Polycarbonatlösungen mit Hilfe von Entgasungsextrudern werden in DE 29 08 352 und EP 1 165 302 beschrieben. In diesen beiden Extruder-Verfahren wird am Extrudereintritt eine sogenannte Rückwärtsentgasung beschrieben. Dabei wird eine gegebenenfalls vorgeheizte Polymerlösung in einen Zweischneckenextruder eingebracht und schäumt dort auf. Die Gase werden dann durch die Gänge des Zweischneckenextruders rückwärts zu einem Entgasungsdom abgeführt. Allgemein ist eine derartige Rückwärtsentgasung Stand der Technik und z.B. in dem Lehrbuch "Der gleichläufige Doppelschneckenextruder", Klemens Kohlgrüber, Carl Hanser Verlag, ISBN 978-3-446-41252-1 [1], auf den Seiten 193-195 beschrieben. Ein Nachteil der Rückwärtsentgasung ist eine Limitierung in der Menge an abgedampftem Lösungsmittel , weil die Schneckenkanäle relativ eng sind und dadurch hohe Gasgeschwindigkeiten erreicht werden, die zu Mitriss von Produkt in den rückwärts gelegenen Entgasungsdom führen kann. So muss ein relativ hoher Anteil an Restlösungsmittel in den weiteren Stufen des Extruders ausgedampft werden, wenn 65- bis 75 Gew-%ige Polycarbonatlösungen in diese Apparate eingeführt werden und bis auf wenige ppm bezogen auf die gesamte Polycarbonatmasse Restlösungsmittelgehalte im Polycarbonat eingedampft werden sollen. Dabei können thermische Schädigungen des Polycarbonats auftreten, wie z.B. Vergilbungen, Bildung von unlöslichen Bestandteilen, Stippen, Spaltung der Polymerketten, Bildung von Restmonomeren und anderen niedermolekularen Bestandteilen etc. Auch ist nachteilhaft, wenn direkt in einen Extruder eine Polycarbonatlösung mit Restgehalten an Lösungsmittel, wie Dichlormethan, eingespeist wird, da die dem Fachmann wohl bekannte Überhitzung der Lösung an den Kämmen der Schnecke in Gegenwart von beispielsweise Dichlormethan zu lokaler Produktschädigung und damit zu Verfärbung des Gesamtproduktes führt. Die in der EP 1 165 302 angegebenen Drehzahlen von bis zu 390/min sind zwar für eine gute Entgasung zwingend erforderlich, führen aber gleichzeitig zu starkem Temperaturanstieg im Produkt und daher zu Verfärbungen und Bildung von niedermolekularen Komponenten im Polycarbonat.

Eine Methode zur Restentgasung von Polycarbonatlösungen mithilfe von Schäumungsmitteln ist die WO 2005/103114. Hierbei wird das Verdampfen des organischen Lösungsmittels bis zu einem Gehalt an Polycarbonat von 90 bis 99,95 Gew.-%, gegebenenfalls Vermischen der so erhaltenen Schmelze mit einem Schäumungsmittel und das Entgasen der aus einem der vorhergehenden Schmelze durch Einleiten über Eintrittsöffnungen in einen Abscheidebehälter unter Vakuum beschrieben. Die in den Beispielen angegebenen Restgehalte waren minimal 7 ppm aromatische Chlor-Kohlenwasserstoffe (Chlorbenzol). Die dort angegebenen Leitelemente für die Schmelze im Vakuum, die zu besonders niedrigen Restgehalten führen, sind wegen der Gefahr der Bildung von Gel ungünstig.

Eine Methode zur Verringerung von Restgehalten von Monomeren und Phenolen in Polycarbonaten, die nach dem Umesterungsverfahren hergestellt wurden, ist in der EP 1 742 983 beschrieben. Dieses Verfahren erreicht eine Reduzierung der Restgehalte bis etwa 30 ppm Diarylcarbonat (in diesem Fall Diphenylcarbonat). Die dort angegebenen Leitelemente für die Schmelze im Vakuum, die zu besonders niedrigen Restgehalten führen, sind wegen der Gefahr der Bildung von Gel ungünstig. Auch ist diese Methode aufgrund der Reaktivität des durch Umesterung hergestellten Polycarbonats nicht geeignet, die Restgehalte an Phenol auf weniger als 15 ppm zu verringern.

Weiterer Stand der Technik zur Restentgasung von Lösungen thermoplastischer Polymere ist die EP 1 556 418, in der das Eindüsen und Verteilen von Flüssigkeiten, insbesondere Wasser, unter Druck über speziell gestaltete Flüssigkeitsverteiler in dem Polymerschmelzestrom beschrieben wird. Beim Entspannen in einer Abscheidekammer werden mithilfe der verdampfenden Flüssigkeit ein Aufschäumen der Polymerschmelze und damit eine Aufkonzentrierung durch Verdampfen der Lösemittel erreicht. Die Verwendung von Wasser als Schäumungsmittel für die Restentgasung von Polycarbonatschmelzen ist wegen der Gefahr des Polymerabbaus durch Hydrolyse nicht empfehlenswert. Die EP-PS gibt im Übrigen keine hinreichende Lehre zur Gestaltung des Apparates, in dem die Entspannung und Aufkonzentrierung stattfindet.

Weiterer Stand der Technik zur Restentgasung von Lösungen thermoplastischer Polymere ist die EP 905 149, in der das Eindüsen von Blähmitteln in den Polymerstrom entgegengesetzt zu dessen Strömungsrichtung und das Verteilen von Blähmitteln, wie z.B. Wasser oder leicht flüchtige aliphatische Kohlenwasserstoffe, in diesem Polymerstrom beschrieben wird. Die Verwendung von Wasser als Schäumungsmittel für die Restentgasung von Polycarbonatschmelzen ist wegen der Gefahr des Polymerabbaus durch Hydrolyse nicht empfehlenswert und die Verwendung anderer Lösemittel ist im Hinblick auf Rückgewinnungen in Stoffkreisläufen sowie der verbleibenen Restgehalte im Produkt nicht angezeigt.

Weiterhin offenbart EP-A 027 700 die Kombination eines Flash-Verdampfers mit einem Entgasungsextruder zur Aufkonzentrierung der Lösungen von Olefinpolymerisaten, wobei vor der Flash-Stufe Wasserdampf als Schleppmittel in den Polymerschmelzestrom eingedüst wird. Im Fall von Polycarbonatschmelzen kann Wasser bei erhöhter Temperatur zu Polymerabbau durch Hydrolyse führen. Daher ist ein solches Verfahren für die Restentgasung von Polycarbonatschmelzen nicht empfehlenswert. Weiterhin wird dort beschrieben, dass das Produkt in dem Entgasungsbehälter im Boden der Apparatur "eingesammelt" wird, das in Kontakt mit dem Boden des Entgasungsbehälters dem Extruder zugeführt wird, was zu erhöhten Verweilzeiten des Polymers und damit zu thermischer Schädigung führt.

In EP 1 113 848 B1 wurde für die letzte Stufe der Eindampfung eine Kombination aus Rohr- und Strangverdampfer beschrieben. Dabei wird die Polymerlösung zunächst in einem vertikalen Rohrbündelwärmetauscher mit nachgeschaltetem Abscheider, ausgehend von einer Lösung mit 60 bis 75 Gew.-% Polycarbonat, auf 98 bis 99 Gew.-% aufkonzentriert und anschließend in einem Strangverdampfer auf Restgehalte von 5 bis 500 ppm Chlorbenzol aufkonzentiert wird. Bei der Verwendung eines Strangverdampfers wird die Polymerschmelze in einem Abscheider unter Vakuum und erhöhter Temperatur zu feinen Strängen geformt und so vom Lösungsmittel befreit. Der Nachteil der Strangverdampfertechnik liegt darin, dass eine effektive Entgasung nur durch stabile, das bedeutet im Apparat nicht abreißende, Stränge gewährleistet ist. Die Stabilität der Stränge wird durch die Viskosität der Polymerlösung beeinflusst. Eine zu niedrige Viskosität kann zu Strangabrissen führen. Das bedeutet eine Einschränkung der Betriebsparameter hinsichtlich Temperatur und Eintrittsgehalt an restflüchtigen Bestandteilen. Neben dem negativen Einfluss auf die Viskosität hat eine zu hohe Eintrittskonzentration an flüchtigen Bestandteilen direkt nachteilige Auswirkungen auf den erzielbaren Entgasungserfolg, da der Stoffaustausch rein durch Diffusion bestimmt ist. Die Oberfläche für den Stoffaustausch ist dagegen durch die Stranggeometrie festgelegt. Die erforderliche große Fläche des Schmelzeverteilers, der zum Erzeugen der Stränge erforderlich ist, erfordert zudem große, teure Apparate. Diese großen Apparate wiederum haben zwangsläufig große Flächen, die, vor allem im Austrag, mit geringen Strömungsgeschwindigkeiten durchströmt werden. Derartige geringe Strömungsgeschwindigkeiten führen zu langen Verweilzeiten des Polycarbonats in der Nähe der Wände und induzieren dort unerwünschte Veränderungen im Polycarbonat, wie Verfärbung und Bildung von Gel.

In [1], S. 193, Abb. 10.1 sind schematisch zwei Verfahren zur Entgasung von Monomeren oder geringer Mengen Lösemittel angegeben.

Ein dort beschriebenes Verfahren (mittlere Zeile der Abbildung) besteht schematisch aus einer Zugabezone, einer Knetzone, einer Schleppmittelzugabe in einer Mischzone, einer Entgasungszone, einer weiteren Schleppmittelzugabe in einer Mischzone, einer weiteren Entgasungszone und einer anschließenden Granulierung. Die Knetzone in diesem Verfahren führt zu hohem Energieeintrag, was der Produktqualität abträglich ist. Da nur zwei Entgasungszonen vorgesehen sind, wird nur ein geringer Entgasungserfolg erzielt. Eine weitere Erhöhung der Zahl der Entgasungszonen ist in dieser Anordnung nicht möglich, weil die Temperaturbelastung hierdurch zu hoch steigen würde.

Ein weiteres dort beschriebenes Verfahren (untere Zeile der Abbildung) besteht schematisch aus einer Zugabezone, einer Knetzone, einer Entgasungszone, einer Schleppmittelzugabe in einer Mischzone, einer weiteren Entgasungszone und einer anschließenden Granulierung. Die Knetzone in diesem Verfahren führt zu hohem Energieeintrag, was der Produktqualität abträglich ist. Die Leistung in der ersten Entgasungszone ist bei kleinen Eintrittskonzentrationen durch die Abwesenheit von Schleppmittel nicht gegeben, so dass die Gesamt-Entgasungsleistung dieser schematischen Konfiguration noch niedriger ist als bei jener der mittleren Zeile.

Der Erfindung liegt die Aufgabe zugrunde, ein Polycarbonat mit extrem niedrigen Restwerten an flüchtigen Bestandteilen und thermischen Abbauprodukten sowie verbesserten optischen Eigenschaften, insbesondere Yellowness Index (YI) und guter thermischer Stabilität, aus lösungsmittelhaltigen Polymerschmelzen herzustellen.

Dieses Polycarbonat weist bevorzugt geringe Gehalte an aromatischen Chlorverbindungen (vor allem an Chlorbenzol), Dichlormethan, Tetrachlorkohlenstoff, Phenol, Diarylcarbonaten (vor allem Diphenylcarbonat), Bisphenolen (vor allem Bisphenol A), Kresolen, nicht halogenierten aromatischen Verbindungen, Natrium und andere Alkalimetallen, Erdalkalimetallen, Pyridin und phenolischen OH auf. Auch sollte es eine helle Eigenfarbe und eine gute thermische Stabilität besitzen.

Die Aufgabe wird überraschenderweise dadurch gelöst, dass eine Vorrichtung und ein Verfahren zur Herstellung dieser Polycarbonate mit Hilfe eines Entgasungsextruders mit mindestens drei Entgasungszonen, bei dem vor mindestens drei Entgasungszonen Zonen zum Eindispergieren von Schleppmittel vorhanden sind, verwendet werden.

Ausdampf- oder Entgasungsextruder sind dem Fachmann im Prinzip bekannt und beispielsweise in [1] beschrieben. Kennzeichnend für Entgasungsextruder sind die sogenannten Entgasungsdome oder Entgasungsöffnungen bzw. Entgasungszonen. Dies sind Gehäuse mit Öffnungen, durch die die enstehenden Brüden entweichen können. Verschiedene Entgasungsdome können bekanntlich bei verschiedenen Drücken betrieben werden, wenn zwischen den Entasungsdömen das Produkt abgestaut wird, so dass es eine Abdichtung zwischen den verschiedenen Drücken bildet.

Der Entgasungsextruder kann weiterhin mit einem Schaumverdampfer und gegebenenfalls einem beheizbaren Fallrohrverdampfer kombiniert werden. Bevorzugt wird diese Apparate-Kombination dann so konstruiert, dass der Konus des Schaumverdampfers senkrecht auf einem der ersten Gehäuse des Entgasungsextruders angeordnet ist und dass mindestens 70%, bevorzugt 100% des nach oben offenen Querschnitts der Schnecken als Eintrittsöffnung für die aus dem Fallrohrverdampfer herabfallende Schmelze zur Verfügung steht.

Bevorzugt werden Polycarbonatlösungen, die nach dem Phasengrenzflächenverfahren in aromatischen Chlor-Kohlenwasserstoffen wie z.B. Chlorbenzol als Lösungsmittel oder in einer Mischung aus aromatischen Chlor-Kohlenwasserstoffen mit Dichlormethan hergestellt werden, in dieser Vorrichtung schonend weitgehend von leichtflüchtigen Komponenten befreit. Bei einer Kombination des Entgasungsextruders mit einem Schaumverdampfer und gegebenenfalls einem beheizbaren Fallrohrverdampfer, wird bevorzugt der Fallrohrverdampfer, falls vorhanden, als erste Stufe von der Polycarbonatschmelze durchlaufen, in der zweiten Stufe der Schaumverdampfer und der Entgasungsextruder als dritte Stufe.

Gegenstand der Erfindung ist somit weiterhin ein Herstellverfahren zur Entfernung flüchtiger Bestandteile aus lösungsmittelhaltigen Polymerschmelzen, insbesondere aus aromatische Chlorkohlenwasserstoffe enthaltenden Polycarbonatschmelzen mit Hilfe eines Entgasungsextruders mit mindestens drei Entgasungszonen und vor mindestens drei Entgasungszonen Zonen zum Eindispergieren von Schleppmittel vorhanden sind verwendet werden. Das Schleppmittel wird bei einem Druck oberhalb des Drucks der Polymerschmelze im Extruder zugegeben. In einer bevorzugten Ausführungsform wird eine Apparate-Kombination aus wenigstens einem Schaumverdampfer und einem Entgasungsextruder verwendet.

In einer weiteren bevorzugten Ausführungsform wird eine Apparate-Kombination aus wenigstens einem beheizbaren Fallrohrverdampfer, wenigstens einem Schaumverdampfer und einem Entgasungsextruder verwendet.

In einer besonders bevorzugten Ausführungsform wird diese Apparate-Kombination so ausgelegt, dass die Abführung der im Schaumverdampfer entstehenden lösungsmittelhaltigen Brüden direkt aus dem Gehäuse des Schaumverdampfers über sogenannte Brüdenleitungen erfolgt.

In einer weiteren besonders bevorzugten Ausführungsform dieser Apparate-Kombination ist eine Eindüsung und Vermischung von inerten Komponenten wie beispielsweise Stickstoff, Argon, Kohlendioxid, Wasser, Methan oder Helium oder eine Mischung aus einer oder mehrerer dieser Komponenten, bevorzugt Stickstoff als Schleppmittel in den Polymerschmelzestrom vor dem Schaumverdampfer.

In einer weiteren besonders bevorzugten Ausführungsform dieser Apparate-Kombination erfolgt die Eindüsung von Inertgas als Schleppmittel an einem oder mehreren Gehäusen des Entgasungsextruders.

Durch die dem Extruder vorgelagerte Eindampfung in dem Fallrohrverdampfer, falls vorhanden, und dem Schaumverdampfer kann die Drehzahl des Extruders nochmals gesenkt und so die Temperatur, und somit die Produktschädigung, verringert werden.

Der erfindungsgemäß verwendete Fallrohrverdampfer enthält wenigstens einen beheizbaren Rohrbündelwärmetauscher, der senkrecht auf einem Abscheider angeordnet und mit diesem unmittelbar verbunden ist. Die Rohre des Rohrbündelwärmetauschers, die mit Polycarbonatschmelze beaufschlagt sind, münden frei in diesen Abscheider, der seinerseits über den unteren Konus frei und unabsperrbar direkt mit einer Austragspumpe verbunden ist.

Der Abscheider des Fallrohrverdampfers verfügt in einer besonders bevorzugten Ausführungsform im oberen Bereich über mindestens eine Austrittsöffnung zur Abführung gasförmiger Brüden, über mindestens ein Abscheidegefäß, auf dessen Boden sich vom Brüdenstrom mitgerissene Schmelzepartikel abscheiden können, und über eine Kondensationseinrichtung, die aus einem oder mehreren Kondensatoren, Vakuumpumpen und Regelventilen bestehen kann. Die Auslegung derartiger Kondensationseinrichtungen ist dem Fachmann bekannt.

In einer bevorzugten Ausführungsform besteht der Fallrohrverdampfer aus einem RohrbündelWärmetauscher. Die Polycarbonatlösung wird durch eine Eintrittsöffnung am oberen Ende des Fallrohrverdampfers eingeleitet und über einen Verteilerboden einer Vielzahl von Rohren zugeführt, die von außen beheizt werden. Bevorzugt erfolgt die Beheizung über kondensierenden Wasserdampf, einen kondensierenden organischen Wärmeträger oder über einen flüssigen organischen Wärmeträger. Über die Innenoberfläche der Rohre wird die Wärmeenergie zur Verdampfung von Lösungsmittel in die Polycarbonatschmelze eingetragen. Dabei verdampfen Lösungsmittelanteile und bilden ein zweiphasiges Gas-Flüssig-Gemisch aus. So wird gezielt eine Überhitzung der Polymerschmelze vermieden. Das entweichende dampfförmige Lösungsmittel bewirkt eine ständige Durchmischung und Oberflächenerneuerung der Polycarbonatschmelze, was deren effizientere Aufkonzentrierung bewirkt. Diese Schmelze wird dadurch weniger thermisch belastet, so dass die Bildung von unerwünschten Nebenprodukten deutlich gemindert ist. Durch die getrennte Abführung der Brüden aus dem Fallrohrverdampfer wird zudem die Leistungsbilanz des Schaumverdampfers / Entgasungsextruders verbessert.

Die in den Fallrohrverdampfer eintretende Polycarbonat-Lösung enthält bevorzugt 65 bis 95 Gew.-% Polycarbonat, bezogen auf das Gesamtgewicht der Polycarbonat-Lösung.

Durch die in einer bevorzugten Ausführungsform zusätzliche Einführung von Schleppgasen vor dem Fallrohr-Verdampfer und/oder im Entgasungsextruder wird der Grad der Restentgasung der Polycarbonatschmelze auf schonende Weise weiter verbessert.

In einer besonders bevorzugten Ausführungsform weist der Fallrohrverdampfer bevorzugt einen Rohrbündelwärmetauscher auf, mit vertikalen, beheizten Rohren mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m und der Durchsatz je Wärmetauscherrohr durch die Rohre 0,5 bis 10 kg/h, bevorzugt 3 bis 7 kg/h, bezogen auf das Polymer. Die Heiztemperatur der Rohre beträgt von 240°C bis 360°C, bevorzugt von 250°C bis 340°C und ganz besonders bevorzugt von 260°C bis 300°C. Der Werkstoff für den Rohrbündelwärmetauscher soll gegenüber den Korrosionsangriffen durch Dichlormethan beständig sein und das Polycarbonat nicht schädigen. Bevorzugt wird ein eisenarmes oder eisenfreier Werkstoff eingesetzt. Bevorzugt sind nickelbasierte Werkstoffe mit Eisengehalten kleiner als 4 Gew. %, besonders bevorzugt die Legierungen mit den Werkstoffnummern (It Stahlschlüssel 2007, Verlag Wegst GmbH): 2.4605 (NiCr23Mo16A1) und 2.4610 (NiMo16Cr16Ti).

In dem Schaumverdampfer wird die Eindampfung bevorzugt von ungefähr 90% Lösemittel bis 0,1% Lösemittel auf Restgehalte von 10 ppm bis 250 ppm durchgeführt. Der Schaumverdampfer kann beispielsweise wie in der EP 1 740 638 beschrieben ausgeführt werden. Er besteht bevorzugt aus einem Verteiler, der senkrecht auf einem Abscheider angeordnet und mit diesem unmittelbar verbunden ist. Die Öffnungen des Verteilers, die mit Polycarbonat beaufschlagt sind, münden bevorzugt frei in diesen Abscheider.

Vor dem Schaumverdampfer kann optional ein Schäumungsmittel zugegeben werden, um die Eindampfung zu verbessern. Um ein Aufschäumen der Polycarbonatschmelze im Schaumverdampfer zu initiieren und damit eine besonders effektive Entgasung zu erzielen, sollte genügend Lösungsmittel in der Polycarbonatschmelze vorhanden sein. Dementsprechend beträgt bevorzugt die Übersättigung der Polycarbonatschmelze mit flüchtigen Bestandteilen beim Eintritt in die Eintrittsöffnungen mindestens 0,1 bar, bevorzugt mindestens 0,5 bar und besonders bevorzugt mindestens 1 bar. Die Übersättigung wird definiert als die Differenz des Dampfdrucks aller flüchtigen Komponenten beim Eintritt in die Eintrittsöffnungen und dem Druck im Abscheidebehälter (nachfolgend auch als Abscheider oder Entgasungsbehälter bezeichnet). Der Dampfdruck setzt sich aus der Summe der Partialdrücke aller in der Polymerschmelze vorhandenen Komponenten zusammen und ist abhängig von der Temperatur und der Konzentration der flüchtigen Bestandteile. Wird allein durch Reste an Lösungsmittel in der Polycarbonatschmelze der erforderliche Dampfdruck aufgebaut, kann auf den Einsatz von Schäumungsmittel verzichtet werden.

Das Schäumungsmittel, das optional zugegeben wird, besteht aus einer niedermolekularen Substanz mit hohem Dampfdruck, wie beispielsweise Stickstoff, Methan, Wasserstoff, Helium, Kohlendioxid oder Wasser. Bevorzugt werden Kohlendioxid und Stickstoff, besonders bevorzugt Stickstoff. Die Art, wie ein Schäumungsmittel zugegeben werden kann, ist dem Fachmann bekannt und beispielsweise in der EP 1740638 beschrieben. Bevorzugt wird ein Statikmischer zur Zugabe verwendet. Der Dampfdruck des Schäumungsmittels für die am Eintritt in die Eintrittsöffnungen des Schaumverdampfers herrschende Temperatur bei der eingestellten Konzentration an Schäumungsmittel in der Schmelze beträgt bevorzugt 0,1 bis 100 bar, besonders bevorzugt 0,5 bis 60 bar und ganz besonders bevorzugt 1 bis 40 bar.

In einer bevorzugten Ausführung ist der untere Teil des Abscheiders frei und unabsperrbar mit dem Entgasungsextruder verbunden, so dass die Polycarbonatschmelze direkt in den Entgasungsextruder gelangen kann.

In einer anderen bevorzugten Ausführungsform ist ein Austragsorgan, bevorzugt eine Zahnradpumpe, am unteren Ende des Abscheiders angeordnet, von er aus die Polycarbonatschmelze in den Entgasungsextruder gepumpt werden kann.

Der Abscheider verfügt im oberen Bereich über mindestens eine Austrittsöffnung zur Abführung gasförmiger Brüden über mindestens ein Abscheidegefäß, auf dessen Boden sich vom Brüdenstrom mitgerissene Schmelzepartikel abscheiden können, und über eine Brüden-Kondensationseinrichtung sowie eine Vakuumerzeugung mit Druckregelung.

In einer bevorzugten Ausführungsform besteht der Verteiler aus einer Düsenplatte mit Bohrungen. Bevorzugte Durchmesser der Bohrungen sind bevorzugt 0,8 bis 5 mm, besonders bevorzugt 1 bis 4 mm.

In einer weiteren bevorzugten Ausführung besteht der Verteiler aus einem RohrbündelWärmetauscher, in dem die Polycarbonatlösung gleichzeitig aufgeheizt oder gekühlt, bevorzugt aufgeheizt wird. Die Rohrinnendurchmesser des Rohrbündel-Wärmetauschers betragen bevorzugt von 4 bis 20 mm, besonders bevorzugt von 5 bis 15 mm. Die Länge der Rohre beträgt bevorzugt 300 bis 2500 mm, besonders bevorzugt 500 bis 2000 mm. Der Massenstrom pro Öffnung beträgt bevorzugt 0,1 bis 20 kg/h.

Im Eintritt des Schaumverdampfers ist die Konzentration an Polycarbonat, die der Konzentration am Austritt des Fallrohrverdampfers entspricht, bevorzugt 85% bis 99,99%, besonders bevorzugt 90% bis 99,95%.

Um ein hinreichendes Aufschäumen und eine gute Entgasung zu garantieren, ist die Summe der Dampfdrücke aller flüchtigen Komponenten (Rest-Lösemittel und Schäumungsmittel) bevorzugt wenigstens ein bar über dem Druck in dem Abscheider zu wählen.

Der Druck im Abscheidebehälter beträgt bevorzugt von 0,1 mbar bis 20 mbar, besonders bevozugt von 1 mbar bis 10 mbar.

Die Rest-Konzentration an Lösemittel beträgt nach dem Schaumverdampfer bevorzugt 10 ppm bis 250 ppm, besonders bevorzugt 20 ppm bis 100 ppm.

Die Temperatur der Polycarbonatschmelze am Austritt des Schaumverdampfers beträgt bevorzugt 250°C bis 350°C, besonders bevorzugt 280°C bis 320°C.

Der Entgasungsextruder kann ein- oder mehrwellig ausgeführt sein, bevorzugt ein-, zwei- oder vierwellig, ganz besonders bevorzugt zweiwellig. Die Ausführung eines mehrwelligen Entgasungsextruders kann gleich- oder gegenläufig, dicht kämmend oder tangierend sein oder, im Fall von vier oder mehr Wellen, eine Kombination aus dicht kämmend und tangierend. Besonders bevorzugt wird die Ausführung als dicht kämmender, gleichläufiger Doppelschneckenextruder gestaltet.

Die Entgasungszonen können zwei- und dreigängig ausgeführt werden, bevorzugt zweigängig.

Eine hohe Entgasung lässt sich insbesondere erzielen, wenn gemäß einer weiteren besonders bevorzugten Ausführungsform der Extruder in Förderrichtung mehrere Entgasungszonen aufweist, an denen jeweils eine Absaugeinrichtung angeschlossen ist. Der Druck in jeder Entgasungszone liegt bevorzugt zwischen 10 Pa und 10 kPa, besonders bevorzugt zwischen 100 Pa und 1 kPa. Die Zahl der Entgasungszonen beträgt mindestens zwei, bevorzugt mindestens drei und besonders bevorzugt mindestens vier. Jede der Entgasungszonen verfügt bevorzugt über einen Entgasungsdom, über den die entstehenden Brüden abgeführt werden. Zwischen den verschiedenen Entgasungszonen des Extruders sind Stauzonen angeordnet, bei denen durch neutrale oder rückfördernde Elemente Druckabfall erzeugt wird, wodurch der freie Querschnitt des Extruders vollständig gefüllt wird. Damit werden unterschiedliche Drücke im Gasraum der Entgasungszonen ermöglicht. Bevorzugt werden Knetelemente oder rückwärtsfördernde Schraubenelemente hierfür eingesetzt.

In einer bevorzugten Ausführungsform kann die Entgasung im Entgasungsextruder mit einem die Entgasungsoberfläche vergrößernden Schleppmittel positiv beeinflusst werden. Bei dem erfindungsgemäßen Verfahren wird das Schleppmittel vorzugsweise in Förderrichtung vor jeder der Entgasungszonen zugemischt. Als Schleppmittel kann vorzugsweise Stickstoff verwendet werden. Das Schleppmittel wird beispielsweise in einer Knet- oder Mischzone dispergiert. Die Ausführung derartiger Knet- oder Mischzonen ist dem Fachmann bekannt und besteht beisipielsweise, wie in [1] auf Seite 199 dargestellt, aus einer Abfolge (in Förderrichrung) von einer rückfördernden Zone, einer Zahnmischzone und einer weiteren rückfördernden Zone. Das Schleppmittel wird dann in die Zahnmischzone eindispergiert. Statt der Zahmnischzonen können auch dem Fachmann bekannte Knetzonen verwendet werden. Derartige Knetzonen sind dem Fachmann ebenfalls bekannt und z.B. in [1] auf Seite 107 ff. beschrieben. Der zugeführte Schleppmittelvolumenstrom sollte bevorzugt vorzugsweise 0.05 Masse-% bis 0.3 Masse-% etragen. Nach der letzten Entgasungszone werden noch Additive und ggf. ein Strom an aufgeschmolzenem Polycarbonat zugegeben, die in einer Druckaufbauzone mit dem Hauptstrom gemischt werden. Bevorzugt werden die Additive in einem Polycarbonatstrom vorgemischt, wobei besonders bevorzugt eine Mischung aus erfindungsgemäßem Polycarbonat und Additiven verwendet wird. Eine Alternative nach dem Stand der Technik wäre es, Additive in Lösungsmittel wie besipielsweise Chlormethan, Trichlormethan, Chlorbenzol, Toluol, Xylol, Aceton, Alkanen wie beispielsweise Cyclohexan oder n-Hexan zuzugeben. Dies hat allerdings den Nachteil, dass sich Restgehalte dieser Lösungsmittel dann im Produkt wiederfinden.

In einer weiteren bevorzugten Ausführungsform können beispielsweise auch Schneckenelemente mit paarweise gleichsinnigen und paarweise exakt abschabenden Schneckenwellen, wobei erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet eingesetzt werden. Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet. Solche Schneckenelemente sind beispielsweise in der zum Anmeldezeitpunkt noch unveröffentlichten deutschen Offenlegungsschrift DE 10 2008 029306.7 beschrieben. In einem "Kammbereich" haben die Schneckenelemente ihren größten Durchmesser und reinigen die Wand ab. In einem "Nutbereich" haben die Schneckenelemente ihren kleinsten Durchmesser. In einem "Übergangsbereich" haben die Schneckenelemente weder ihren größten noch ihren kleinsten Durchmesser. Besonders bevorzugt weden diese Schneckenelemente zum Druckaufbau am Austritt des Extruders sowie zum Druckaufbau vor den Schleppmitteldispergierzonen eingesetzt.

In einer bevorzugten Ausführungsform können beispielsweise Schneckenelemente für mehrwellige Schneckenmaschinen mit paarweise gleichsinnigen und paarweise exakt abschabenden Schneckenwellen, mit zwei oder mehr Schneckengängen Z, mit Achsabstand A und Außendurchmesser DE, wobei die Summe der Kammwinkel eines Elementepaares größer als 0 und

kleiner ist als $2\pi - 4\, Z\, \mathrm{arccos}\left(\dfrac{A}{DE}\right)$ eingesetzt werden.

Solche Schneckenelemente sind beispielsweise in der zum Anmeldezeitpunkt noch unveröffentlichten deutschen Offenlegungsschrift DE 10 2008 029305.9. beschrieben. Besonders bevorzugt werden derartige Schneckenelemente in den Entgasungszonen eingesetzt.

Die nach dem erfindungsgemäßen Verfahren erhältlichen thermoplastischen Polycarbonate haben bevorzugt Restgehalte:

- Chlorbenzol und anderen aromatischen Chlorverbindungen von weniger als 10 ppm, bevorzugt weniger als 5 ppm und besonders bevorzugt weniger als 2 ppm.

- Dichlormethan von weniger als 1 ppm, bevorzugt weniger als 0,5 ppm

- Einwertigen Phenolen wie Phenol, tert.-Butylphenol und Cumylphenol von weniger als 15 ppm, bevorzugt weniger als 5 ppm und besonders bevorzugt weniger als 2 ppm

- Alkanen von weniger als 10 ppm, bevorzugt weniger als 5 ppm

Besonders bevorzugt haben die erzeugten thermoplastischen Polycarbonate Restgehalte:

- Tetrachlorkohlenstoff von weniger als 0,01 ppm

- Diarylcarbonaten, vor allem Diphenylcarbonat und Di-tertiär-Butyl-Phenolcarbonat, von weniger als 5 ppm, bevorzugt weniger als 2 ppm

- Bisphenol A und anderen Bisphenolen von weniger als 5 ppm, bevorzugt weniger als 2 ppm und besonders bevorzugt von weniger als 0,5 ppm

- Natrium und anderen Alkali- und Erdalkalimetallen von weniger als 0,05 ppm

- Kresolen von weniger als 1 ppm, bevorzugt weniger als 0,2 ppm

- Phenolischen OH-Gruppen von weniger als 300 ppm, bevorzugt weniger als 200 ppm, besonders bevorzugt weniger als 100 ppm

- Erdalkalimetallen von weniger als 0,1 ppm, besonders bevorzugt weniger als 0,05 ppm

- Pyridin von weiniger als 1 ppm, bevorzugt weniger als 0, 1 ppm

- nicht halogenierten aromatischen Verbindungen wie Xylol und Toluol von weniger als 10 ppm, bevorzugt weniger als 5 ppm

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)sulfone, Bis-(hydroxyphenyl)-sulfoxide, $\alpha,\alpha'$-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)propan, Bis-(3,5-dimethyl-4-hydroxyphenyl)-methan, 2,2-Bis-(3,5-dimethyl-4-hydroxyphenyl)propan, Bis-(3,5-dimethyl-4-hydroxyphenyl)sulfon, 2,4-Bis-(3,5-dimethyl-4-hydroxyphenyl)-2-methylbutan, 1,3-Bis-[2-(3,5-dimethyl-4-hydroxyphenyl)2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeigneten Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol% bezogen auf Mole eingesetzte Bisphenole, bevorzugt 0,01 bis 8 Mol%, besonders bevorzugt 0,05 bis 5 Mol%.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Die durch die Reaktion erhaltenen Polycarbonate haben, bezogen auf das Gewicht an Polycarbonat, Gehalte an phenolischen OH-Endgruppen von kleiner als 300 ppm, bevorzugt kleiner als 200 ppm. Nach der Waschung enthält das Polycarbonat noch Gehalte von kleiner als 100 ppb Natrium, bevorzugt weniger als 50 ppb Natrium, jeweils bezogen auf das Polycarbonat. Das vorliegende Natrium liegt nach einem sauren Waschschritt nicht in alkalischer Form vor, sondern in neutraler Form als Salz, wodurch es das Polycarbonat deutlich weniger angreift.

Diese gereinigte Lösung wird dann im folgenden Schritt einer oder mehrerer Voreindampfungs-Stufen zugeführt, die aus Flashstufen oder Flashstufen mit Wendelrohr bestehen, bis eine Konzentration von etwa 65% Polycarbonat erreicht ist. Dann werden sie bevorzugt der erfindungsgemäßen Kombination aus Fallrohrverdampfer, Schaumverdampfer und Entgasungsextruder zugeführt.

Die nach dem erfindungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

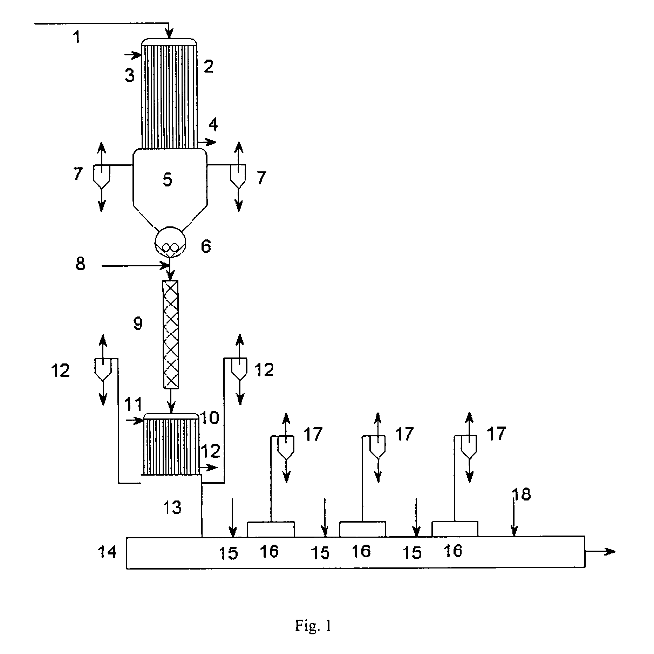

Nachfolgend wird die Erfindung anhand einer ein Ausführungsbeispiel darstellenden Fig. 1 näher erläutert.

Die Polymerlösung wird durch eine Zuführung 1 dem nach unten offenen Rohrbündelwärmetauscher 2 zugeführt. Der Rohrbündelwärmetauscher wird mit Heizmedium beheizt, das bei 3 zu- und bei 4 abgeführt wird. Am Ende der Rohre entspannt die Polymerlösung in den Abscheidebehälter 5, der direkt über dem Extruder angeordnet ist. Das freigesetzte Gas wird über die Brüdenleitung 6 abgeführt. Das Produkt fällt direkt in die Einzugszone 7 des Extruders und wird durch eine Abdichtungszone 8 der ersten Entgasungszone 9 zugeführt, die über einen Entgasungsdom 10 verfügt. Danach folgen weitere Stauzonen 8 und Entgasungszonen 9. Vor dem letzten Entgasungsdom wird in der Knetzone 11 über die Zugabestelle 12 Stickstoff zugegeben. Bei der Zugabestelle 13 werden noch Additive und ggf. aufgeschmolzenes Polymer zugegeben, die in der Druckaufbau- und Mischzone 14 mit dem Polymerstrom vermischt werden.

Die folgenden Beispiele dienen der exemplarischen Erläuterung der Erfindung und sind nicht als Beschränkung aufzufassen.

## Beispiele

### Beispiel 1:

Die Apparatekonfiguration von Beispiel 1 ist in Fig. 1 dargestellt. 7500 kg/h Polycarbonat mit einer relativen Viskosität von 1,295 würden in einer Lösung, die 65 Gewichts-% Polycarbonat, 33,5% Gewichts-% Chlorbenzol und 1,5 Gewichts-% Dichlormethan enthält, in einer Rohrleitung 1 mit einer Temperatur von 230°C dem Fallrohrverdampfer 2 zugeführt. Der Fallrohrverdampfer wurde über die Zugabe 3 mit dampfförmigem Wärmeträgeröl beheizt. Das Kondensat wurde über den Auslass 4 abgelassen. Die Länge der Rohre des Fallrohrverdampfers 2 war 2,5 m, der Innendurchmesser war 10 mm und die Anzahl der Rohre 1150. Die Heiztemperatur war 330°C, die Austrittstemperatur des Polymers beim Austritt in den Abscheidebehälter 5 war 295°C. Der Druck im Abscheidebehälter 5 war 250 mbar, der Restgehalt an Chlorbenzol war 5000 ppm und der Restgehalt an Dichlormethan 50 ppm. Die entstehenden Brüden wurden über zwei Leitungen dem Abscheidebehälter entnommen. Gegebenfalls mitgerissenes Polymer wurde in den Abscheidern 7 zurückgehalten. Die Brüden wurden danach in einem Kondensator kondensiert. Der Druck wurde mit einer Vakuumpumpe eingestellt.

Die konzentrierte Polymerlösung wurde in der Zahnradpumpe 6 gesammelt und dem Statikmischer 9 zugeführt. Über die Zugabe 8 wurde dem Statikmischer 0,1 Gew-% Stickstoff zugemischt. Der Stickstoff wurde im Statikmischer 9 komplett in Lösung gebracht.

Die Polymerschmelze mit dem Stickstoff wurde in einem Schaumverdampfer 11, der sich direkt oberhalb des Entgasungsextruders 14 befand, weiter entgast. Der Schaumverdampfer bestand aus 1500 Rohren mit einer Länge von 1,15 m, die mit 310°C beheizt waren. Der Druck im Abscheidebehälter 13 des Schaumverdampfers betrug 1 mbar. Die Rohre des Schaumverdampfers wurden über die Zugabe 11 mit dampfförmigen Wärmeträgeröl beheizt. Das kondensierte Wärmeträgeröl wurde über den Auslass 12 wieder entfernt. Die entstehenden Brüden wurden über zwei Leitungen dem Abscheidebehälter entnommen. Gegebenfalls mitgerissenes Polymer wurde in den Abscheidern 12 zurückgehalten. Der Restgehalt an Chlorbenzol nach dem Schaumverdampfer betrug 20 ppm. Der Abscheidbehälter 13 des Schaumverdampfers war direkt über dem Entgasungsextruder 14 angeordnet.

Der Entgasungsextruder 14 war als zweigängiger, dicht kämmender Doppelschneckenextruder mit einem Nenndurchmesser von 180 mm und einem Verhältnis von Länge zu Durchmesser von 40 ausgeführt. Er war mit drei Zonen 15 zum Eindispergieren von Schleppmittel, jeweils gefolgt von Entgasungszonen 16 zum Entfernen des Schleppmittels und der flüchtigen Bestandteile ausgerüstet. Gegebenfalls mitgerissenes Polymer wurde in den Abscheidern 17 zurückgehalten. Bei 18 wurden Additive, die durch einen Seitenextruder in Mischung mit Polycarbonat vorliegen, zugegeben. Danach erfolgte der Druckaufbau zur Granulierung.

Die Drehzahl des Extruders betrug 200/min. Die Temperatur am Ende des Extruders betrug 350°C, der Restgehalt an Chlorbenzol betrug 2 ppm. Dichlormethan ließ sich nicht mehr nachweisen (<0,1 ppm). Der Yellowness-Index betrug 1,6.

**Beispiel 2**

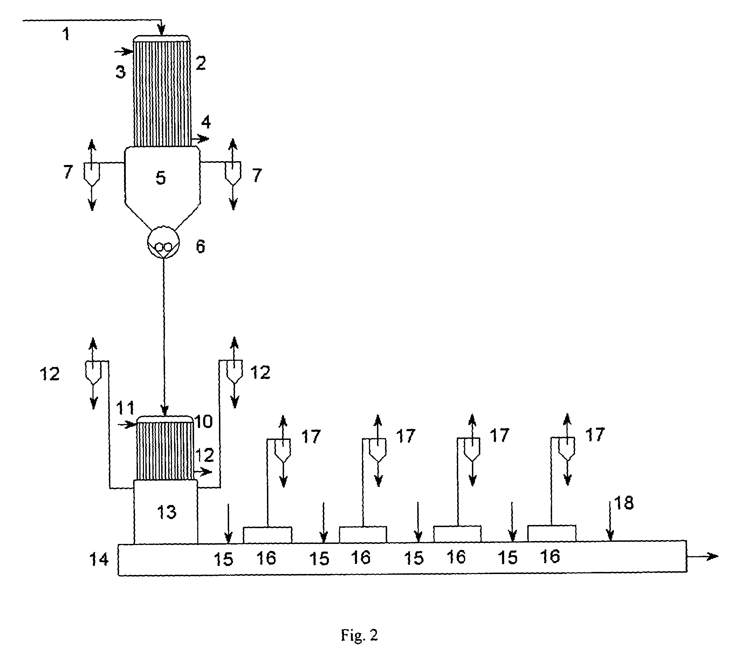

Die Apparatekonfiguration von Beispiel 2 ist in Figur 2 dargestellt. 7500 kg/h Polycarbonat mit einer relativen Viskosität von 1,295 wurden in einer Lösung, die 65 Gewichts-% Polycarbonat, 33,5% Gewichts-% Chlorbenzol und 1,5 Gewichts-% Dichlormethan enthält, in einer Rohrleitung 1 mit einer Temperatur von 230°C dem Fallrohrverdampfer 2 zugeführt. Der Fallrohrverdampfer wurde über die Zugabe 3 mit dampfförmigem Wärmeträgeröl beheizt. Das Kondensat wurde über den Auslass 4 abgelassen. Die Länge der Rohre des Fallrohrverdampfers 2 war 2,5 m, der Innendurchmesser war 10 mm und die Anzahl der Rohre 1150. Die Heiztemperatur war 330°C, die Austrittstemperatur des Polymers beim Austritt in den Abscheidebehälter 5 ist 295°C. Der Druck im Abscheidebehälter 5 war 2 bar, der Restgehalt an Chlorbenzol war 5 Gew-% und der Restgehalt an Dichlormethan 500 ppm. Die entstehenden Brüden wurden über zwei Leitungen dem Abscheidebehälter entnommen. Gegebenenfalls mitgerissenes Polymer wurde in den Abscheidern 7 zurückgehalten. Die Brüden wurden danach in einem Kondensator kondensiert.

Die konzentrierte Polymerlösung wurde in der Zahnradpumpe 6 gesammelt und dem Fallrohrverdampfer 10 zugeführt. Der Schaumverdampfer bestand aus 1500 Rohren mit einer Länge von 1,15 m, die mit 310°C beheizt waren. Der Druck im Abscheidebehälter 13 des Schaumverdampfers betrug 6 mbar. Die Rohre des Schaumverdampfers wurden über die Zugabe 11 mit dampfförmigen Wärmeträgeröl beheizt. Das kondensierte Wärmeträgeröl wurde über den Auslass 12 wieder entfernt. Die entstehenden Brüden wurden über zwei Leitungen dem Abscheidebehälter entnommen. Gegebenfalls mitgerissenes Polymer wurde in den Abscheidern 12 zurückgehalten. Der Restgehalt an Chlorbenzol nach dem Schaumverdampfer betrug 90 ppm. Der Abscheidbehälter 13 des Schaumverdampfers war direkt über dem Entgasungsextruder 14 angeordnet.

Der Entgasungsextruder 14 war als zweigängiger, dicht kämmender Doppelschneckenextruder mit einem Nenndurchmesser von 180 mm und einem Verhältnis von Länge zu Durchmesser von 48 ausgeführt. Er war mit vier Zonen 15 zum Eindispergieren von Schleppmittel, jeweils gefolgt von Entgasungszonen 16 zum Entfernen des Schleppmittels und der flüchtigen Bestandteile ausgerüstet. Gegebenenfalls mitgerissenes Polymer wurde in den Abscheidern 17 zurückgehalten. Bei 18 wurden Additive, die durch einen Seitenextruder in Mischung mit Polycarbonat vorlagen, zugegeben. Danach erfolgte der Druckaufbau zur Granulierung.

Die Drehzahl des Extruders betrug 180/min. Die Temperatur am Ende des Extruders betrug 345°C, der Restgehalt an Chlorbenzol betrug 4 ppm. Dichlormethan ließ sich nicht mehr nachweisen (<0,1 ppm). Der Yellowness-Index betrug 1,6.

**Beispiel 3**

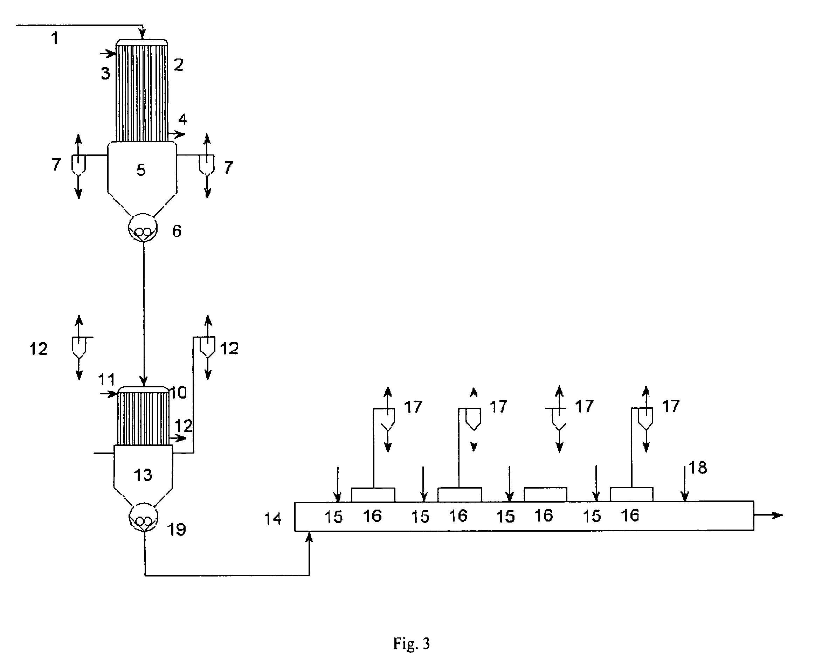

Die Apparatekonfiguration von Beispiel 3 ist in Figur 3 dargestellt. 7500 kg/h verzweigtes Polycarbonat mit einer relativen Viskosität von 1,325 wurden in einer Lösung, die 65 Gewichts-% Polycarbonat, 33,5% Gewichts-% Chlorbenzol und 1,5 Gewichts-% Dichlormethan enthält, in einer Rohrleitung 1 mit einer Temperatur von 230°C dem Fallrohrverdampfer 2 zugeführt. Der Fallrohrverdampfer wurde über die Zugabe 3 mit dampfförmigem Wärmeträgeröl beheizt. Das Kondensat wurde über den Auslass 4 abgelassen. Die Länge der Rohre des Fallrohrverdampfers 2 war 2,5 m, der Innendurchmesser war 10 mm und die Anzahl der Rohre 1150. Die Heiztemperatur war 330°C, die Austrittstemperatur des Polymers beim Austritt in den Abscheidebehälter 5 war 295°C. Der Druck im Abscheidebehälter 5 war 2,5 bar, der Restgehalt an Chlorbenzol war 7 Gew-% und der Restgehalt an Dichlormethan 700 ppm. Die entstehenden Brüden wurden über zwei Leitungen dem Abscheidebehälter entnommen. Gegebenenfalls mitgerissenes Polymer wurde in den Abscheidern 7 zurückgehalten. Die Brüden wurden danach in einem Kondensator kondensiert.

Die konzentrierte Polymerlösung wurde in der Zahnradpumpe 6 gesammelt und dem Fallrohrverdampfer 10 zugeführt. Der Schaumverdampfer bestand aus 1500 Rohren mit einer Länge von 1,15 m, die mit 320°C beheizt waren. Der Druck im Abscheidebehälter 13 des Schaumverdampfers betrug 4,5 mbar. Die Rohre des Schaumverdampfers wurden über die Zugabe 11 mit dampfförmigen Wärmeträgeröl beheizt. Das kondensierte Wärmeträgeröl wurde über den Auslass 12 wieder entfernt. Die entstehenden Brüden wurden über zwei Leitungen dem Abscheidebehälter entnommen. Gegebenfalls mitgerissenes Polymer wurde in den Abscheidern 12 zurückgehalten. Der Restgehalt an Chlorbenzol nach dem Schaumverdampfer betrug 60 ppm. Am Boden des Schaumverdampfers wurde die Polymerschmelze von der Zahnradpumpe 19 eingesammelt und dem Entgasungsextruder zugeführt.

Der Entgasungsextruder 14 war als zweigängiger, dicht kämmender Doppelschneckenextruder mit einem Nenndurchmesser von 180 mm und einem Verhältnis von Länge zu Durchmesser von 48 ausgeführt. Er war mit vier Zonen 15 zum Eindispergieren von Schleppmittel, jeweils gefolgt von Entgasungszonen 16 zum Entfernen des Schleppmittels und der flüchtigen Bestandteile ausgerüstet. Gegebenenfalls mitgerissenes Polymer wurde in den Abscheidern 17 zurückgehalten. Bei 18 wurden Additive, die durch einen Seitenextruder in Mischung mit Polycarbonat vorlagen, zugegeben. Danach erfolgte der Druckaufbau zur Granulierung.

Die Drehzahl des Extruders betrug 200/min. Die Temperatur am Ende des Extruders betrug 380°C, der Restgehalt an Chlorbenzol betrug 4,5 ppm. Dichlormethan ließ sich nicht mehr nachweisen (<0,1 ppm). Die Transmission betrug 88,0%.

**Beispiel 4**

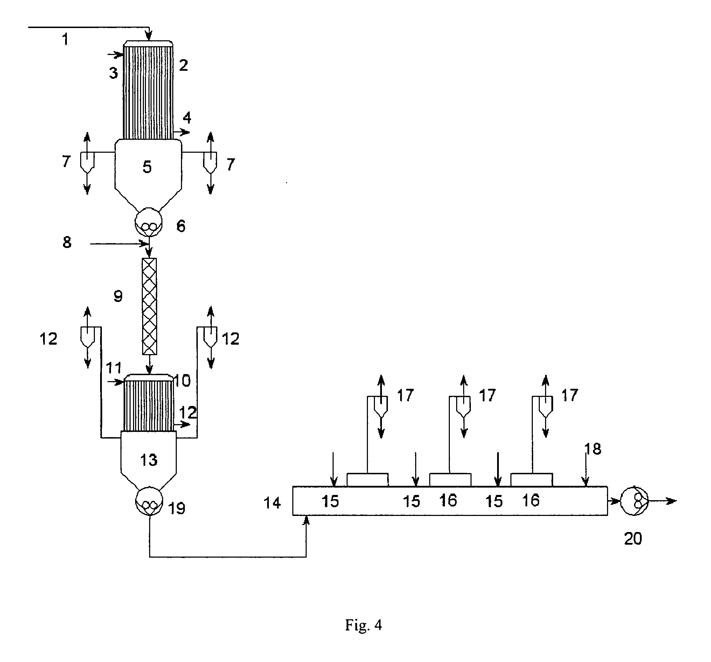

Die Apparatekonfiguration von Beispiel 4 ist in Figur 4 dargestellt. 7500 kg/h verzweigtes Polycarbonat mit einer relativen Viskosität von 1,325 wurden in einer Lösung, die 65 Gewichts-% Polycarbonat, 33,5% Gewichts-% Chlorbenzol und 1,5 Gewichts-% Dichlormethan enthält, in einer Rohrleitung 1 mit einer Temperatur von 230°C dem Fallrohrverdampfer 2 zugeführt. Der Fallrohrverdampfer wurde über die Zugabe 3 mit dampfförmigem Wärmeträgeröl beheizt. Das Kondensat wurde über den Auslass 4 abgelassen. Die Länge der Rohre des Fallrohrverdampfers 2 war 2,5 m, der Innendurchmesser war 10 mm und die Anzahl der Rohre 1150. Die Heiztemperatur ist 300°C, die Austrittstemperatur des Polymers beim Austritt in den Abscheidebehälter 5 war 270°C. Der Druck im Abscheidebehälter 5 war 50 mbar, der Restgehalt an Chlorbenzol ist 1000 ppm und der Restgehalt an Dichlormethan 10 ppm. Die entstehenden Brüden wurden über zwei Leitungen dem Abscheidebehälter entnommen. Gegebenenfalls mitgerissenes Polymer wurde in den Abscheidern 7 zurückgehalten. Die Brüden wurden danach in einem Kondensator kondensiert. Der Druck wurde mit einer Vakuumpumpe eingestellt.

Die konzentrierte Polymerlösung wurde in der Zahnradpumpe 6 gesammelt und dem Statikmischer 9 zugeführt. Über die Zugabe 8 wurde dem Statikmischer 0,1 Gew-% Stickstoff zugeführt. Der Stickstoff wird im Statikmischer 9 komplett in Lösung gebracht

Die Polymerschmelze mit dem Stickstoff wurde in einem Schaumverdampfer 11 weiter entgast. Der Schaumverdampfer bestand aus 1500 Rohren mit einer Länge von 1,15 m, die mit 320°C beheizt waren. Der Druck im Abscheidebehälter 13 des Schaumverdampfers betrug 1 mbar. Die Rohre des Schaumverdampfers wurden über die Zugabe 11 mit dampfförmigen Wärmeträgeröl beheizt. Das kondensierte Wärmeträgeröl wurde über den Auslass 12 wieder entfernt. Die entstehenden Brüden wurden über zwei Leitungen dem Abscheidebehälter entnommen. Gegebenenfalls mitgerissenes Polymer wurde in den Abscheidern 12 zurückgehalten. Der Restgehalt an Chlorbenzol nach dem Schaumverdampfer betrug 15 ppm. Am Boden des Abscheidebehälters 13 des Schaumverdampfers wurde die Polymerschmelze mit der Zahnradpumpe 19 gesammelt und zum Entgasungsextruder 15 gepumpt.

Der Entgasungsextruder 14 war als zweigängiger, dicht kämmender Doppelschneckenextruder mit einem Nenndurchmesser von 180 mm und einem Verhältnis von Länge zu Durchmesser von 40 ausgeführt. Er war mit drei Zonen 15 zum Eindispergieren von Schleppmittel, jeweils gefolgt von Entgasungszonen 16 zum Entfernen des Schleppmittels und der flüchtigen Bestandteile ausgerüstet. Gegebenenfalls mitgerissenes Polymer wurde in den Abscheidern 17 zurückgehalten. Bei 18 wurden Additive, die durch einen Seitenextruder in Mischung mit Polycarbonat vorlagen, zugegeben. Der Druckaufbau zur Granulierung erfolgte mit einer Zahnradpumpe 20.

Die Drehzahl des Extruders betrug 160/min. Die Temperatur am Ende des Extruders betrug 360°C, der Restgehalt an Chlorbenzol betrug 1,2 ppm. Dichlormethan ließ sich nicht mehr nachweisen (<0,1 ppm). Die Transmission betrug 88%.

**Vergleichsbeispiel 5**

6500 kg/h Polycarbonat wurden in einem Extruder mit Rückwärtsentgasung aus einer Lösung von 65% Polycarbonat, 33.5% Chlorbenzol und 1.5% Dichlormethan isoliert. Der verwendete Entgasungsextruder war genau wie in Beispiel 1 als dicht kämmender, gleichsinnig drehender Doppelschneckenextruder ausgeführt und hatte einen Nenndurchmesser von 180 mm, ein Verhältnis von Länge zu Durchmesser von 48 und war in der Einzugszone und den Entgasungszonen zweigängig ausgeführt. In einer Schleppmittelzone wurden, ebenso wie in Beispiel 1, 1.3 kg/h Stickstoff zugeführt. Die Temperatur der Polymerlösung von der Rückwärtsentgasung betrug 185°C.

Der Chlorbenzol-Restgehalt betrug 410 ppm und die Temperatur an der Düse des Extruders 409°C. Der Yellowness-Index betrug 2.3. Der Gehalt an Dichlormethan betrug 0.5 ppm

**Beispiel 6**

67 kg/h verzweigtes Polycarbonat mit einer relativen Viskosität von 1,316 wurden in einer Lösung, die 65 Gew-% Polycarbonat, 33,5 Gew-% Chlorbenzol und 1,5 Gewichts-% Dichlormethan enthielt, in einer Rohrleitung 1 mit einer Temperatur von 230°C einem Fallrohrverdampfer mit 19 Rohren zugeführt. Die Rohre hatten einen Innendurchmesser von 10,3 mm und eine Länge von 2,5 m. Die Heiztemperatur betrug 300°C, der Druck im Abscheider 1,1 bar. Die so eingedampfte Lösung wurde in einem Statikmischer mit 100 g/h Stickstoff vermischt und einem Schaumverdampfer mit 22 Rohren mit einem Innendurchmesser von 10 mm und einer Länge von 1,5 m in einen zweiwelligen Extruder mit vier Entgasungszonen gefahren. Die Drücke in den Entgasungszonen betrugen zwischen 3,5 und 5 mbar. Vor der zweiten, dritten und vierten Entgasungszone wurden jeweils 100 Gramm pro Stunde Stickstoff dispergiert. Die Restgehalte an Chlorbenzol betrugen 1,3 ppm. Dichlormethan war nicht nachweisbar (<0,5 ppm). Die Restgehalte an Kresolen betrugen weniger als 1 ppm. Die Restgehalte an freiem BPA betrugen 2 ppm. Die Restgehalte an freiem Phenol betrugen 11 ppm. Die Restgehalte an freiem Diphenylcarbonat betrugen 2 ppm. Die Gehalte an phenolischen OH-Endgruppen betrugen 170 ppm Die Restgehalte an Alkali- und Erdalkalimetallen betrugen zusammen weniger als 0,05 ppm (Nachweisgrenze). Die Restgehalte an Tetrachlorkohlenstoff betrugen weniger als die Nachweisgrenze von 0,01 ppm. Die Restgehalte an nicht halogenierten aromatischen Verbindungen betrugen weniger als 5 ppm (Nachweisgrenze). Der Restgehalt an Pyridn betrug weniger als 0,01 ppm (Nachweisgrenze).

**Patentansprüche**

1. Aromatisches Polycarbonat enthaltend weniger als 5 ppm aromatische Chlorverbindungen und weniger als 0,5 ppm Dichlormethan und weniger als 5 ppm einwertige Phenole und weniger als 0,5 ppm aromatische Verbindungen, die kein Chlor enthalten.

2. Aromatisches Polycarbonat nach Anspruch 1, enthaltend weniger als 0,01 ppm Tetrachlorkohlenstoff, weniger als 2 ppm Diarylcarbonate, weniger als 2 ppm Bisphenole, weniger als 0,05 ppm Alkalimetalle, weniger als 0,2 ppm Kresole und weniger als 200 ppm phenolische OH-Gruppen.

3. Vorrichtung zum Entgasen von lösungsmittelhaltigen Polycarbonatschmelzen, dass ein Entgasungsextruder mit mindestens drei Entgasungszonen verwendet wird und vor mindestens drei Entgasungszonen Zonen zum Eindispergieren von Schleppmittel vorhanden sind.

4. Vorrichtung nach Anspruch 3, **dadurch gekennzeichnet, dass** ein Schaumverdampfer und ein Entgasungsextruder kombiniert werden, wobei die Abfolge Schaumverdampfer-Entgasungsextruder ist.

5. Vorrichtung nach Anspruch 4, **dadurch gekennzeichnet, dass** ein Fallrohrverdampfer, ein Schaumverdampfer und ein Entgasungsextruder kombiniert werden, wobei die Abfolge Fallrohrverdampfer, Schaumverdampfer und Entgasungsextruder ist.

6. Vorrichtung nach einem der Ansprüche 3 bis 5, **dadurch gekennzeichnet, dass** der Entgasungsextruder zwei- oder vierwellig ausgeführt ist.

7. Vorrichtung nach einem der Ansprüche 3 bis 6, **dadurch gekennzeichnet, dass** der Entgasungsextruder ein dicht kämmender, gleichsinnig drehender Doppelschneckenextruder ist.

8. Vorrichtung nach einem der Ansprüche 3 bis 7, **dadurch gekennzeichnet, dass** der Schaumverdampfer aus einem Verteiler, der senkrecht auf einem Abscheider angeordnet und mit diesem unmittelbar verbunden ist, besteht, und der Abscheider unmittelbar oberhalb des Entgasungsextruders angeordnet ist.

9. Verfahren zur Herstellung von Polycarbonaten, **dadurch gekennzeichnet, dass** eine Polycarbonat-Lösung, enthaltend wenigstens ein organisches Lösemittel und wenigstens ein Polycarbonat, nach dem Grenzflächenverfahren hergestellt wird und in einem weiteren Schritt diese Polycarbonat-Lösung wenigstens einen Entgasungsextruder zugeführt wird, wobei das Produkt auf dem Entgasungsextruder in mindestens drei Schritten mit Eintrag von Schleppmittel entgast wird.

10. Verfahren nach Anspruch 9, **dadurch gekennzeichnet, dass** die Polycarbonat-Lösung in einem Schaumverdampfer und anschließend in einem Entgasungsextruder entgast wird.

11. Verfahren nach Anspruch 10, **dadurch gekennzeichnet, dass** eine Eindüsung und Vermischung von Inertgasen als Schleppmittel in den Polymerschmelzestrom vor dem Schaumverdampfer erfolgt.

12. Verfahren nach Anspruch 10 oder 11, **dadurch gekennzeichnet, dass** die Polycarbonat-Lösung in einem Fallrohrverampfer, einem Schaumverdampfer und einem Entgasungsextruder entgast wird, wobei die Abfolge Fallrohrverdampfer, Schaumverdampfer und Entgasungsextruder ist.

13. Verfahren nach Anspruch 12, **dadurch gekennzeichnet, dass** die Eingangskonzentration des Polycarbonats in den Fallrohrverdampfer zwischen 60 Gew-% und 95 Gew-% beträgt.

14. Verfahren nach einem der Ansprüche 9 bis 13, **dadurch gekennzeichnet, dass** dem Polymer Additive in einer Mischung mit dem Polycarbonat nach Anspruch 1 oder 2 zugegeben werden.

Fig. 1

Fig. 2

Fig. 3

Fig. 4

| | Europäisches Patentamt |
|---|---|
| | European Patent Office |
| | Office européen des brevets |

**EUROPÄISCHER RECHERCHENBERICHT**

Nummer der Anmeldung

EP 09 00 7270

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/76657 A1 (LG CHEMICAL LTD [KR]; SONG KWANG HO [KR]; PARK KWANG HO [KR]) 21. Dezember 2000 (2000-12-21) * Abbildung 1 * * Seite 6, Zeile 22 - Seite 7, Zeile 10 * ----- | 3 | INV. C08G64/20 C08G64/40 B29C47/76 |
| A,D | EP 1 165 302 B1 (BAYER AG [DE]) 12. Februar 2003 (2003-02-12) * Ansprüche 1,6-9 * * Abbildung * * Absätze [0015] - [0017] * ----- | 1-14 | |
| A | US 2007/225479 A1 (SILVI NORBERTO [US] ET AL) 27. September 2007 (2007-09-27) * Absätze [0032], [0052] * * Abbildung 1 * ----- | 1-14 | |
| A | US 3 410 823 A (CLEVELAND THOMAS H) 12. November 1968 (1968-11-12) * Beispiele 1,2 * ----- | 1-14 | |
| A | DE 195 37 113 C1 (BAYER AG [DE]) 13. März 1997 (1997-03-13) * Beispiele; Tabelle 1 * ----- | 1-14 | RECHERCHIERTE SACHGEBIETE (IPC) C08G B29C |

Der vorliegende Recherchenbericht wurde für alle Patentansprüche erstellt

| Recherchenort | Abschlußdatum der Recherche | Prüfer |
|---|---|---|
| Den Haag | 9. November 2009 | Schlicke, Benedikt |

**ANHANG ZUM EUROPÄISCHEN RECHERCHENBERICHT**
**ÜBER DIE EUROPÄISCHE PATENTANMELDUNG NR.**     EP 09 00 7270

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2009

| Im Recherchenbericht angeführtes Patentdokument | Datum der Veröffentlichung | Mitglied(er) der Patentfamilie | Datum der Veröffentlichung |
|---|---|---|---|
| WO 0076657 A1 | 21-12-2000 | AT 352372 T | 15-02-2007 |
| | | DE 60033168 T2 | 08-11-2007 |
| | | EP 1227881 A1 | 07-08-2002 |
| | | ES 2279759 T3 | 01-09-2007 |
| | | JP 3428978 B2 | 22-07-2003 |
| | | JP 2003501549 T | 14-01-2003 |
| | | US 6657039 B1 | 02-12-2003 |
| EP 1165302 B1 | 12-02-2003 | AU 3555700 A | 16-10-2000 |
| | | BR 0009367 A | 26-12-2001 |
| | | CN 1345265 A | 17-04-2002 |
| | | DE 19914143 A1 | 28-09-2000 |
| | | WO 0058072 A1 | 05-10-2000 |
| | | EP 1165302 A1 | 02-01-2002 |
| | | ES 2192521 T3 | 16-10-2003 |
| | | HK 1045665 A1 | 14-05-2004 |
| | | ID 30399 A | 29-11-2001 |
| | | JP 2002539987 T | 26-11-2002 |
| | | TW 548174 B | 21-08-2003 |
| | | US 6811294 B1 | 02-11-2004 |
| US 2007225479 A1 | 27-09-2007 | WO 2008150643 A1 | 11-12-2008 |
| US 3410823 A | 12-11-1968 | DE 1301559 B | 21-08-1969 |
| DE 19537113 C1 | 13-03-1997 | EP 0768155 A1 | 16-04-1997 |
| | | ES 2155912 T3 | 01-06-2001 |
| | | JP 3671093 B2 | 13-07-2005 |
| | | JP 9110999 A | 28-04-1997 |
| | | US 5684087 A | 04-11-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3114432 A
- DE 3429960
- EP 1088019 A
- EP 1265944 A
- EP 113848 A1
- EP 1113848 A
- DE 2908352
- EP 1165302 A
- WO 2005103114 A

- EP 1742983 A
- EP 1556418 A
- EP 905149 A
- EP 027700 A
- EP 1113848 B1
- EP 1740638 A
- DE 102008029306
- DE 102008029305


**In der Beschreibung aufgeführte Nicht-Patentliteratur**

- Chemistry and Physics of Polycarbonates. **Schnell.** Polymer Reviews. Interscience Publishers, 1964, vol. 9, 33-70

- **H. Burttschel et al.** *J. Am. Water Works Assoc.,* 1959, vol. 51, 205
- **Klemens Kohlgrüber.** Der gleichläufige Doppelschneckenextruder. Carl Hanser Verlag, 193-195